# EUROPEAN PATENT SPECIFICATION

(11) **EP 2 806 582 B1**
(45) Date of publication and mention of the grant of the patent: **15.03.2017**
(21) Application number: 13872415.8
(22) Date of filing: 25.01.2013
(51) Int. Cl.: H04B 10/07, H04J 14/02

(54) **ALARM INHIBITION METHOD AND OPTICAL NETWORK DEVICE**
ALARMHEMMUNGSVERFAHREN UND OPTISCHE NETZWERKVORRICHTUNG
MÉTHODE D'INHIBITION D'ALARME ET DISPOSITIF DE RÉSEAU OPTIQUE

(43) Date of publication of application: 26.11.2014
(73) Proprietor: Huawei Technologies Co., Ltd., Longgang District Shenzhen, Guangdong 518129 (CN)
(72) Inventor: SUN, Liang, Shenzhen Guangdong 518129 (CN); YAN, Jun, Shenzhen Guangdong 518129 (CN); YU, Gaofeng, Shenzhen Guangdong 518129 (CN); ZENG, Jianguo, Shenzhen Guangdong 518129 (CN)
(74) Representative: Kreuz, Georg Maria
(86) International application number: PCT/CN2013/070981
(87) International publication number: WO 2014/113966

(56) References cited:
- EP-A1- 1 959 587
- EP-A1- 2 302 958
- CN-A- 1 392 683
- CN-A- 1 498 471
- CN-A- 101 009 518
- CN-A- 101 656 621
- GB-A- 2 371 168
- US-B1- 6 239 699

## Description

### TECHNICAL FIELD

Embodiments of the present invention relate to communications technologies, and in particular, to a method for alarm suppression and an optical network device.

### BACKGROUND

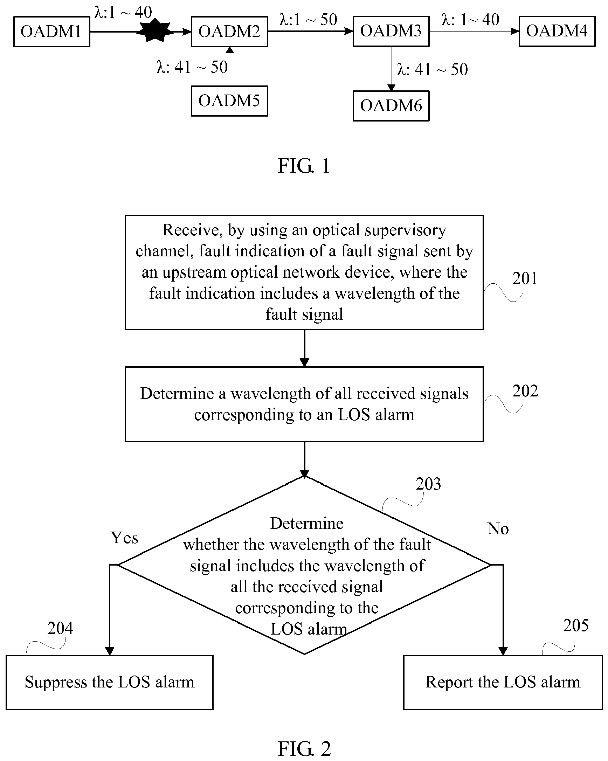

As optical networks are used widely, more faults are likely to occur in the optical networks. In the prior art, a loss of signal (Loss of Signal, LOS for short) is reported for handling a fault in time, so as to ensure performance of an optical network. FIG. 1 is a schematic diagram of an optical transfer network scenario. Optical network devices in FIG. 1 are optical add-drop multiplexers (Optical Add-Drop Multiplexer, OADM for short). Before an optical signal is transferred, wavelength information of an optical signal to be sent or an optical signal to be received needs to be configured for each optical network device relative to a neighbor optical network device, and an optical channel corresponding to each piece of the wavelength information also needs to be configured. In FIG. 1, OADM 1, OADM 2, OADM 4 are used as an example. OADM 1 is configured to send a signal of wavelengths 1 to 40 to OADM 2; OADM 5 is configured to send a signal of wavelengths 41 to 50 to OADM 2; OADM 2 is configured to receive the signal of the wavelengths 1 to 40 of OADM 1 and the signal of the wavelengths 41 to 50 of OADM 5; OADM 2 is further configured to send a signal of wavelengths 1 to 50 to OADM 3; OADM 4 is configured to receive the signal of the wavelengths 1 to 40 sent by OADM 3; and other OADMs are configured similarly, which is not described herein. An OADM, when detecting that the signal of all wavelengths configured for a downstream neighbor OADM are faulty, generates optical multiplex section-payload missing indication (Optical Multiplex Section-Payload Missing Indication, OMS-PMI), and sends the generated OMS-PMI to the downstream neighbor OADM; an OADM, when detecting that the signal of all wavelengths configured for a neighbor OADM are faulty but receiving no OMS-PMI sent by an upstream optical network device, reports an LOS alarm to a network management system. For example, when an optical fiber between OADM 1 and OADM 2 is disconnected, OADM 2 detects that the signal of the wavelengths 1 to 40 of OADM 1 configured to be received is faulty and receives no OMS-PMI sent by OADM 1. Therefore, OADM 2 reports an LOS alarm to a network management system. Moreover, because not all the signals of wavelengths 1 to 50 that OADM 2 are configured to send to OADM 3 are faulty, OADM 2 does not send an OMSPMI to OADM 3. However, OADM 3 detects that the signals of wavelengths 1 to 40 that are configured to send to OADM 4 are faulty and receives no OMS-PMI sent by OADM 2. Therefore, OADM 3 also reports an LOS alarm to the network management system.

As a result, when the method of the prior art is used, a problem is caused where upstream and downstream optical network devices report an LOS alarm regarding the same fault repeatedly to the network management system.

GB 2371168 A discloses a synchronous communications network such as SDH or SONET, where traffic signals can be tagged to indicate that a fault condition has already been identified and reported. On examination of the alarm tag at subsequent stages, an alarm is suppressed if the tag indicates that the fault has already been reported.

EP 1950587A1 discloses an method for suppressing downstream alarms induced by a fiber line fault in an optical communication system. The method comprises: loading, by a station adjacent to a failed link, an indication signal carrying alarm suppression information onto a optical signal to be output to a downstream fiber of the station upon detection of a fiber line fault; keeping in a normal working status, by a downstream station upon a receipt of the optical signal with the indication signal while the downstream station maintains normal working status.

EP 2302958 A1 discloses an a method for configuring alarm performance. The method for configuring the alarm performance includes the following steps. A network element on a Label Switched Path (LSP) acquires a signaling, where the signaling carries alarm performance configuration information of the LSP; and the network element configures an alarm performance attribute of the network element according to the alarm performance configuration information of the LSP carried in the signaling.

### SUMMARY

Embodiments of the present invention provide a method for alarm suppression and an optical network device to solve the problem where upstream and downstream optical network devices report an LOS alarm regarding the same fault repeatedly to a network management system.

A method for alarm suppression and an optical network device of the invention are presented in the independent claims. Preferred features are further presented in dependent claims.

According to the method for alarm suppression and the optical network device according to the embodiments of the present invention, fault indication of a fault signal sent by an upstream optical network device is received by using an optical supervisory channel; a wavelength of all received signals corresponding to an LOS alarm is determined; whether the wavelength of the fault signal includes the wavelength of all the received signals corresponding to the LOS alarm is determined; and if yes, the LOS alarm is suppressed. This solves, to a certain extent, the problem where upstream and downstream optical network devices report an LOS alarm regarding the same fault repeatedly.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an optical transfer network scenario;
FIG. 2 is a schematic flowchart of a method for alarm suppression according to a first embodiment of the present invention;
FIG. 3 is a schematic flowchart of a method for alarm suppression according to a second embodiment of the present invention;
FIG. 4 is a schematic diagram illustrating a scenario to which a method for alarm suppression according to a third embodiment of the present invention is applicable;
FIG. 5 is a schematic flowchart of a method for alarm suppression according to a third embodiment of the present invention;
FIG. 6 is a schematic diagram illustrating a scenario to which a method for alarm suppression according to a fourth embodiment of the present invention is applicable;
FIG. 7 is a schematic flowchart of a method for alarm suppression according to a fourth embodiment of the present invention;
FIG. 8 is a schematic structural diagram of an optical network device according to a first embodiment of the present invention;
FIG. 9 is a schematic structural diagram of an optical network device according to a second embodiment of the present invention;
FIG. 10 is a schematic structural diagram of an optical network device according to a third embodiment of the present invention; and
FIG. 11 is a schematic structural diagram of an optical network device according to a fourth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

FIG. 2 is a schematic flowchart of a method for alarm suppression according to a first embodiment of the present invention. This embodiment is described by using a downstream optical network device as an executor. As shown in FIG. 2, the method according to this embodiment includes:
S201: Receive, by using an optical supervisory channel, fault indication of a fault signal sent by an upstream optical network device, where the fault indication includes a wavelength of the fault signal.
   Specifically, in an optical transport network (Optical Transport Network, OTN for short), an optical channel is used to transfer an optical signal, and an optical supervisory channel is used to perform state monitoring on optical channels and transfer state information of the optical channels. The state information is, for example, fault indication. An upstream optical network device generates fault indication of a fault signal when determining that a signal is faulty, where the faulty signal indicates that an optical signal configured to be received is not received, or no optical channel corresponding to an optical signal to be sent is configured. Generally, an optical signal to be received or to be sent needs to be configured for optical transmission units in a network device, and an optical channel needs to be configured for the optical signal to be sent, where the optical transmission units refers to units on an internal transmission path of the optical network device of the optical signal, for example, a fiber line interface unit (Fiber line Interface Unit, FIU for short), a demultiplexer (demultiplexer, DMUX for short), a multiplexer (Multiplexer, MUX), and the like.
S202: Determine a wavelength of all received signals corresponding to an LOS alarm.
   For example, any optical transmission unit in a downstream optical network device, when detecting an LOS, may send an LOS alarm to a controlling unit in the same device; and the controlling unit determines, according to a configured optical signal to be received by the optical transmission unit, a wavelength of all received signals corresponding to the LOS alarm.
S203: Determine whether the wavelength of the fault signal includes the wavelength of all the received signals corresponding to the LOS alarm; and if yes, perform S204; otherwise, perform S205.
   For example, a wavelength of a fault signal includes wavelengths 1 to 10; if a wavelength of all received signals corresponding to an LOS alarm includes wavelengths 2 to 5, it may be determined that the wavelength of the fault signal includes the wavelength of all the received signals corresponding to the LOS alarm. If the wavelength of all the received signals corresponding to the LOS alarm includes wavelengths 2 to 15, it may be determined that the wavelength of the fault signal does not include the wavelength of all the received signals corresponding to the LOS alarm.
S204: Suppress the LOS alarm.
S205: Report the LOS alarm.

When the wavelength of the received fault signal sent by the upstream optical network device includes the wavelength of all the received signals corresponding to the LOS alarm, it indicates that the upstream optical network device detected the fault that causes the optical transmission unit to send the LOS alarm, and reported the LOS alarm to the network management system; therefore, the downstream optical network device suppress reporting the LOS alarm to the network management system.

When the wavelength of the received fault signal sent by the upstream optical network device does not include the wavelength of all the received signals corresponding to the LOS alarm, where the expression not including entails not including partially or not including fully, it indicates that a fault of all or a part of signals which are not included in all the received signals corresponding to the LOS alarm is detected for the first time; therefore, the downstream optical network device reports the LOS alarm to the network management system, so that the network management system handles in time the fault in optical network transmission according to the reported LOS alarm.

Alternatively, the downstream optical network device in this embodiment may be an OADM or an optical line amplifier (Optical Line Amplifier, OLA for short). The present invention sets no limit thereto.

In this embodiment, the fault indication of the fault signal sent by the upstream optical network device is received by using the optical supervisory channel, where the fault indication includes the wavelength of the fault signal; the wavelength of all the received signals corresponding to the LOS alarm is determined; whether the wavelength of the fault signal includes the wavelength of all the received signals corresponding to the LOS alarm is determined, and if yes, the LOS alarm is suppressed. This solves, to a certain extent, the problem where upstream and downstream optical network devices report an LOS alarm regarding the same fault repeatedly.

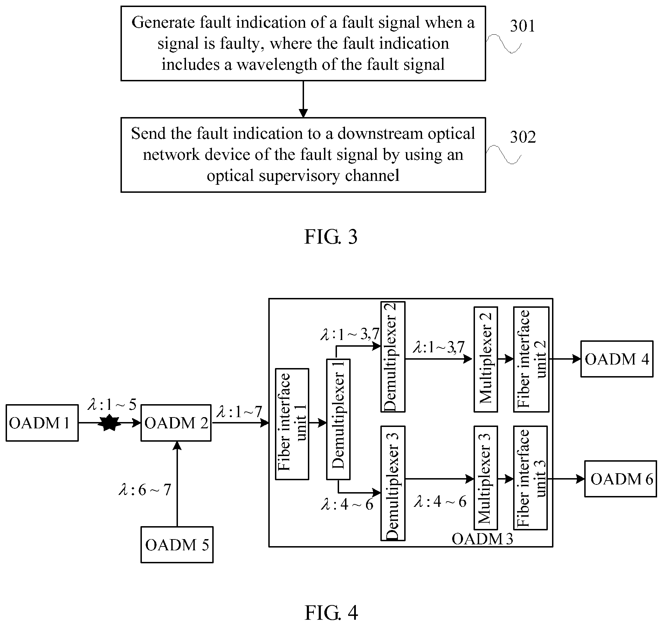

FIG. 3 is a schematic flowchart of a method for alarm suppression according to a second embodiment of the present invention. This embodiment is described by using an upstream optical network device as an executor. As shown in FIG. 3, steps of this embodiment include:
S301: Generate fault indication of a fault signal when a signal is faulty, where the fault indication includes a wavelength of the fault signal.
   Specifically, an upstream optical network device generates, when determining that a signal is faulty, fault indication of the fault signal, where the faulty signal indicates that an optical signal configured to be received is not received, or no optical channel is configured for an optical signal to be sent. The signal fault generally is caused by an optical channel fault. For example, a signal fault is caused when an optical fiber is disconnected, an optical transmission unit on an optical channel is faulty, or no optical channel is configured for a corresponding wavelength.
   The upstream optical network device, when determining that the signal is faulty, sends an LOS alarm to a controlling unit, and the controlling unit reports the LOS alarm to a network management system.
S302: Send the fault indication to a downstream optical network device of the fault signal by using an optical supervisory channel.

Specifically, the upstream optical network device, after generating the fault indication of the fault signal, sends the fault indication of the fault signal to a downstream optical network device of the fault signal by using an optical supervisory channel, so that a controlling unit of the downstream optical network device determines, according to the fault indication of the fault signal, whether to suppress the LOS alarm.

In this embodiment, the fault indication of the fault signal generated by the upstream optical network device may also be used by another optical transmission unit on an internal transmission path of the upstream optical network device of the fault signal to suppress the LOS alarm.

In this embodiment, the upstream optical network device may be any optical transport network device that can generate fault indication, for example, an OADM or an OLA. The present invention sets no limit thereto.

In this embodiment, the upstream optical network device generates the fault indication of the fault signal when determining that the signal is faulty, where the fault indication includes the wavelength of the fault signal; and sends the fault indication to the downstream optical network device of the fault signal by using the optical supervisory channel, so that the downstream optical network device determines, according to the fault indication of the fault signal, whether to suppress the LOS alarm. This solves, to a certain extent, the problem where upstream and downstream optical network devices report an LOS alarm regarding the same fault repeatedly.

In the embodiment illustrated in FIG. 2 or FIG. 3, alternatively, the fault indication is optical channel-forward defect indicator-payload (Optical Channel-Forward Defect Indicator-Payload, Och-FDI-P for short) state information, or Optical channel-open connection indication (Optical Channel-Open Connection Indication, Och-OCI for short) state information. In other words, the fault indication according to the embodiment may be existing Och-FDI-P state information or Och-OCI state information.

In the embodiment illustrated in FIG. 2 or FIG. 3, alternatively, the fault indication may further include the following indication for identifying a fault type, which respectively is inter-station signal failure indication, intra-station signal failure indication, or optical channel disconnection indication.

The upstream optical network device generates the inter-station signal failure indication when a signal inlet unit detects that the signal fails, where the inter-station signal failure indication includes a wavelength of the failed signal, and the inter-station signal failure indication is used to represent a signal failure state caused by a line fault between optical network devices. The inlet unit refers to a first optical transmission unit where an optical signal enters the optical network device, which generally is an FIU. The downstream optical network device determines the fault type of the fault signal as an inter-station line fault according to the inter-station signal failure indication.

The upstream optical network device generates the intra-station signal failure indication when the signal inlet unit detects no signal failure and another unit on the signal transmission path detects that the signal fails, where the intra-station signal failure indication includes the wavelength of the failed signal, and the intra-station signal failure indication is used to represent a signal failure state caused by a fault of an optical transmission unit or a line inside the optical network device on a transmission path of the signal. The downstream optical network device determines the fault type of the fault signal as an intra-station fault according to the intra-station signal failure indication.

The upstream optical network device generates the optical channel disconnection indication when any unit on the transmission path of the signal detects that no optical channel corresponding to the wavelength of the signal is configured, where the optical channel disconnection indication includes the wavelength of the signal for which no optical channel is configured, so that the downstream optical network device determines, according to the optical channel disconnection indication information, a fault type of the fault signal as an optical channel disconnection fault.

In the embodiment illustrated in FIG.2 or FIG. 3, alternatively, the fault indication includes a fault location. The downstream optical network device may obtain a location of a fault point of the fault signal of the fault indication according to the fault location.

In the embodiment described above, the Och-FDI-P or Och-OCI state information may be improved, where the fault type and fault location are added to an overhead byte of the Och-FDI-P or Och-OCI state information, so as to form the fault indication in the embodiment of the present invention to send to the downstream optical network device by using the optical supervisory channel. The fault type and fault location may also be added to an overhead byte of other information, so as to form the fault indication according to the embodiment of the present invention to send to the downstream optical network device by using the optical supervisory channel. Alternatively, the fault type and fault location of the fault signal may be individually sent to the downstream optical network device by using the optical supervisory channel. The present invention sets no limit to a mode for an optical channel to send the fault type and fault location to the downstream optical network device.

Generally, a definition of the fault indication is shown in Table 1:

**Table 1: Definition of fault indication**

| Wavelength No. | Fault Type | Fault Location |
|---|---|---|
| Such as 1,2, and 3 | Such as intra-station signal failure, intra-station signal failure, or optical channel disconnection | Location information of a fault point |

In the embodiment described above, alternatively, after generating the fault indication of the fault signal, the upstream optical network device further sends the fault indication to an upstream optical network device of the fault signal, so that the upstream optical network device of the fault signal obtains the fault type and fault location according to the received fault indication.

Alternatively, a definition of a forward and backward state may be added to the fault indication. An optical network device receiving the fault indication may determine, according to the forward and backward state indication, whether the optical network device sending the fault indication is an upstream optical network device; when the forward and backward state in the received fault indication is a forward state, it indicates that the optical network device sending the fault indication is an upstream optical network device, and the LOS alarm may be suppressed according to the received fault indication.

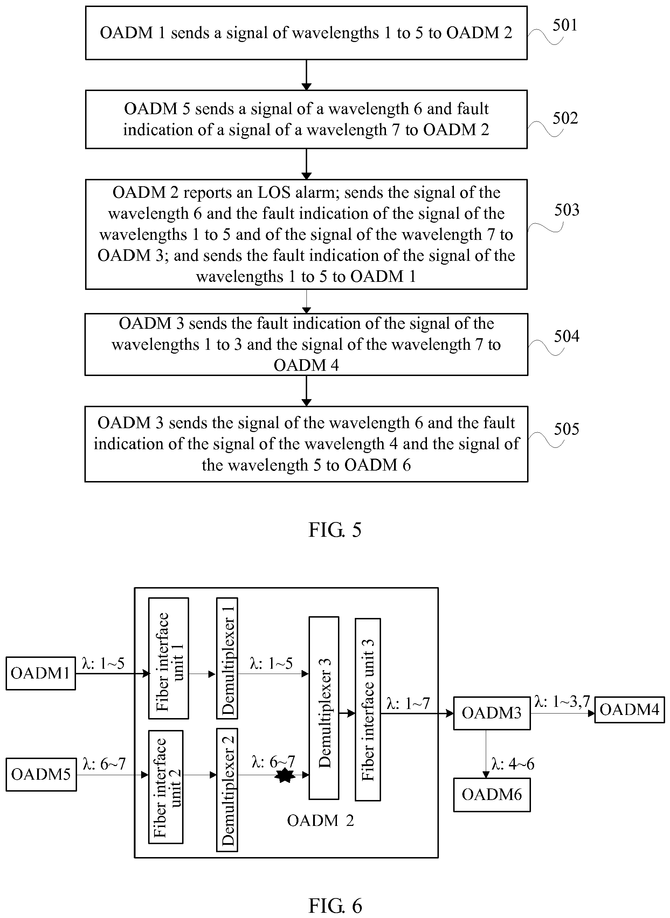

FIG. 4 is a schematic diagram illustrating a scenario to which a method for alarm suppression according to a third embodiment of the present invention is applicable. In this embodiment, an OADM is used as an upstream optical network device and a downstream optical network device as an example. OADM 1 is configured to send a signal of wavelengths 1 to 5 to OADM 2; OADM 5 is configured to send a signal of wavelengths 6 to 7 to OADM 2; OADM 2 is configured to send a signal of wavelengths 1 to 7 to OADM 3; OADM 3 is configured to send a signal of wavelengths 1 to 3 and 7 to OADM 4; and OADM 3 is configured to send a signal of wavelengths 4 to 6 to OADM 6, where a line fault occurs between OADM 1 and OADM 2, and therefore OADM 2 cannot receive the signal of the wavelengths 1 to 5 sent by OADM 1; and OADM 5 is not configured with an optical channel for the wavelength 7. FIG. 4 illustrates a structure of internal optical transmission units of OADM 3. Among the optical transmission units on a transmission path of the signal of the wavelengths 1 to 3 and 7, an inlet unit is FIU 1, and other units on the transmission path are DMUX 1, DMUX 2, MUX 2, and FIU 2. Among the optical transmission units on a transmission path of the signal of the wavelengths 4 to 6, an inlet unit is FIU 1, and other units on the transmission path are DMUX 1, DMUX 3, MUX 3, and FIU 3. FIG. 5 is a schematic flowchart of a method for alarm suppression according to a third embodiment of the present invention. FIG. 5 is described by using an application scenario illustrated in FIG. 4 as an example, as shown in FIG. 5:
S501: OADM 1 sends a signal of wavelengths 1 to 5 to OADM 2.
S502: OADM 5 sends a signal of a wavelength 6 and fault indication of a signal of a wavelength 7 to OADM 2.
Because no optical channel for the wavelength 7 is configured on OADM 5, OADM 5 generates the fault indication of the signal of the wavelength 7, where the fault indication is used to indicate that a fault type of the signal of the wavelength 7 of the signal of the wavelength 7 is optical channel disconnection, and indicate that a fault location of the signal of the wavelength 7 is a local location; and sends the fault indication to OADM 2 by using an optical supervisory channel. The fault indication of the signal of the wavelength 7 further includes forward state indication; OADM 2, upon receiving the fault indication, determines, according to the forward state indication, that the fault indication is sent by an upstream optical network device, and may suppress an LOS alarm according to the fault indication.
The fault indication of the signal of the wavelength 7 sent by OADM 5 to OADM 2 may be illustrated in Table 2:

**Table 2: Fault indication of the signal of the wavelength 7 sent by OADM 5 to OADM 2**

| Wavelength No. | Fault Type | Fault Location | Forward and Backward State |
|---|---|---|---|
| 7 | Optical channel disconnection | OADM 5 | Forward state |

S503: OADM 2 reports an LOS alarm; sends the signal of the wavelength 6 and the fault indication of the signal of the wavelengths 1 to 5 and the signal of the wavelength 7 to OADM 3; and sends the fault indication of the signal of the wavelengths 1 to 5 to OADM 1.

Because a line fault occurs between OADM 2 and OADM 1, an inlet unit of OADM 2 detects that the signal of the wavelengths 1 to 5 is faulty, and reports an LOS alarm to a controlling unit (not shown) of OADM 2. Because a receiving unit of OADM 2 receives no corresponding fault indication containing the signal of the wavelengths 1 to 5, OADM 2 reports an alarm to a network management system, and generates fault indication corresponding to the signal of the wavelengths 1 to 5. OADM 2 sends to OADM 3 the locally generated fault indication corresponding to the signal of the wavelengths 1 to 5, and the received fault indication sent by OADM 5 corresponding to the signal of the wavelength 7. Moreover, OADM 2 sends to the OADM 1 the locally generated fault indication corresponding to the signal of the wavelengths 1 to 5. The fault indication corresponding to the signal of the wavelengths 1 to 5 and the signal of the wavelength 7 respectively includes the fault type and fault location of the signal of respective wavelengths corresponding to wavelengths 1 to 5 and 7.

The fault indication of the signal of the wavelengths 1 to 5 and the signal of the wavelength 7 sent by OADM 2 to OADM 3 further includes forward state indication. The OADM 3 determines, according to the forward state indication, that the fault indication is sent by an upstream optical network device, so as to suppress the LOS alarm according to the fault indication.

The fault indication of the signal of the wavelengths 1 to 5 sent by OADM 2 to OADM 1 further includes backward state indication. The OADM 1 determines, according to the backward state indication, that the fault indication is sent by a downstream optical network device, and does not suppress the LOS alarm according to the fault indication.

The fault indication of the signal of the wavelengths 1 to 5 and the signal of the wavelength 7 sent by OADM 2 to OADM 3 may be illustrated in Table 3:

**Table 3: Fault indication of the signal of the wavelengths 1 to 5 and the signal of the wavelength 7 sent by OADM 2 to OADM 3**

| Wavelength No. | Fault Type | Fault Location | Forward and Backward State |
|---|---|---|---|
| 1 | Inter-station signal failure | OADM 2 | Forward state |
| 2 | Inter-station signal failure | OADM 2 | Forward state |
| 3 | Inter-station signal failure | OADM 2 | Forward state |
| 4 | Inter-station signal failure | OADM 2 | Forward state |
| 5 | Inter-station signal failure | OADM 2 | Forward state |
| 7 | Optical channel disconnection | OADM 5 | Forward state |

The fault indication of the signal of the wavelengths 1 to 5 sent by OADM 2 to OADM 1 may be illustrated in Table 4:

**Table 4: Fault indication of the signal of the wavelengths 1 to 5 sent by OADM 2 to OADM 1**

| Wavelength No. | Fault Type | Fault Location | Forward and Backward State |
|---|---|---|---|
| 1 | Inter-station signal failure | OADM 2 | Backward state |
| 2 | Inter-station signal failure | OADM 2 | Backward state |
| 3 | Inter-station signal failure | OADM 2 | Backward state |
| 4 | Inter-station signal failure | OADM 2 | Backward state |
| 5 | Inter-station signal failure | OADM 2 | Backward state |

OADM 1 may obtain the fault type and fault location according to the received fault indication of the wavelengths sent by OADM 2 corresponding to Table 4.

S504: OADM 3 sends the fault indication of the signal of the wavelengths 1 to 3 and the signal of the wavelength 7 to OADM 4.

Specifically, in OADM 3, DMUX 2, MUX 2, and FIU 2 on the transmission path of the signal of the wavelengths 1 to 3 and the signal of the wavelength 7 detect that all signals are faulty, and send an LOS alarm to a controlling unit (not shown) of OADM 3; the controlling unit of OADM 3 determines, according to the fault indication of the signal of the wavelengths 1 to 3 and the signal of the wavelength 7 contained in the fault indication sent by OADM 2 to OADM 3 by using the optical supervisory channel, to suppress the LOS alarm. Moreover, OADM 3 sends the fault indication of the signal of the wavelengths 1 to 3 and the signal of the wavelength 7 to OADM 4 by using the optical supervisory channel. The fault indication of the signal of the wavelengths 1 to 3 and the signal of the wavelength 7 sent by OADM 3 to OADM 4 further includes forward state indication; and OADM 4 determines, according to the forward state indication in the fault indication, that the fault indication is sent by an upstream optical network device, so as to suppress the LOS alarm according to the fault indication. See Table 5:

**Table 5: Fault indication of the signal of the wavelengths 1 to 3 and the signal of the wavelength 7 sent by OADM 3 to OADM 4**

| Wavelength No. | Fault Type | Fault Location | Forward and Backward State |
|---|---|---|---|
| 1 | Inter-station signal failure | OADM 2 | Forward state |
| 2 | Inter-station signal failure | OADM 2 | Forward state |
| 3 | Inter-station signal failure | OADM 2 | Forward state |
| 7 | Optical channel disconnection | OADM 2 | Forward state |

S505: OADM 3 sends the signal of the wavelength 6 and the fault indication of the signal of the wavelength 4 and the signal of the wavelength 5 to OADM 6.

OADM 3 sends the fault indication of the signal of the wavelength 4 and the signal of the wavelength 5 to OADM 6. The fault indication of the signal of the wavelength 4 and the signal of the wavelength 5 sent by OADM 3 to OADM 6 further includes forward state indication; and OADM 6 determines, according to the forward state indication in the fault indication, that the fault indication is sent by an upstream optical network device, so as to suppress the LOS alarm according to the fault indication. See Table 6:

**Table 6: Fault indication of the signal of the wavelength 4 and the signal of the wavelength 5 sent by OADM 3 to OADM 6**

| Wavelength No. | Fault Type | Fault Location | Forward and Backward State |
|---|---|---|---|
| 4 | Inter-station signal failure | OADM 2 | Forward state |
| 5 | Inter-station signal failure | OADM 2 | Forward state |

OADM 6 may obtain the fault type and fault location according to the received fault indication of the signal of the wavelengths sent by OADM 3.

In this embodiment, the downstream OADM determines, according to the fault indication of the fault signals sent by the upstream OADM, whether to suppress the LOS alarm, which solves the problem where the upstream and downstream devices report an alarm regarding the same fault repeatedly. Moreover, the fault type and fault location are added to the fault indication, and the fault indication containing the fault type and the fault location is sent to the downstream OADM, so that the network management system of the station of the downstream OADM may obtain the upstream fault type and fault location by querying the fault indication of the fault signals.

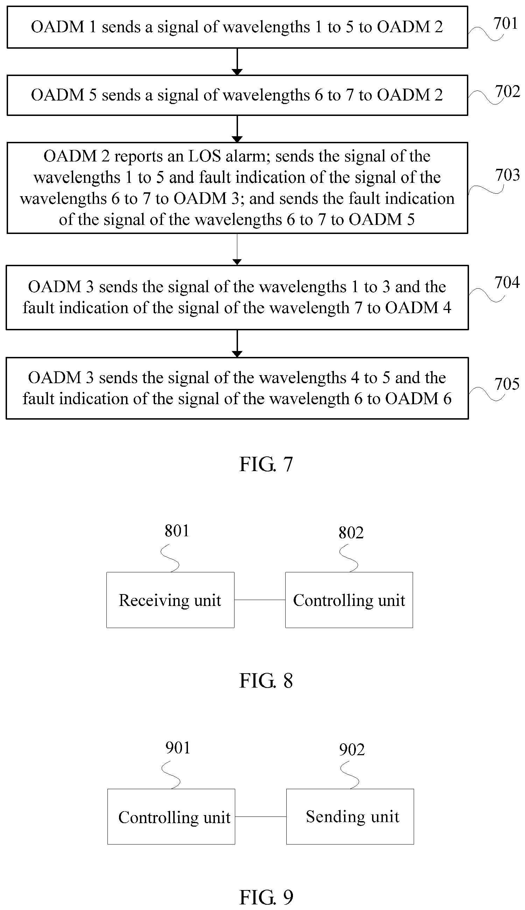

FIG. 6 is a schematic diagram illustrating a scenario to which a method for alarm suppression according to a fourth embodiment of the present invention is applicable. In this embodiment, an OADM is used as an upstream optical network device and a downstream optical network device as an example. OADM 1 is configured to send a signal of wavelengths 1 to 5 to OADM 2; OADM 5 is configured to send a signal of wavelengths 6 to 7 to OADM 2; OADM 2 is configured to send a signal of wavelengths 1 to 7 to OADM 3; OADM 3 is configured to send a signal of wavelengths 1 to 3 and 7 to OADM 4; and OADM 3 is configured to send a signal of wavelengths 4 to 6 to OADM 6. The scenario illustrated in FIG. 6 is different from the application scenario illustrated in FIG. 4 in that a line between the OADMs operates as normal, but a fault occurs on an optical transmission unit on an internal transmission path of the signal of the wavelengths 6 to 7 inside OADM 2, which is of a type of intra-station fault. FIG. 6 shows a structural diagram of internal optical transmission units of OADM 2, where an inlet unit among optical transmission units on a transmission path of the signal of the wavelengths 1 to 5 is FIU 1, other units on the transmission path are DMUX 1, MUX 3, FIU 3; and an inlet unit among optical transmission units on a transmission path of the signal of the wavelengths 6 to 7 is FIU 2, and other units on the transmission path are DMUX 2, MUX 3, and FIU 3. FIG. 7 is a schematic flowchart of a method for alarm suppression according to a fourth embodiment of the present invention. FIG. 7 is described by using the application scenario illustrated in FIG. 6 as an example, as shown in FIG. 7, steps of the embodiment include the following:
S701: OADM 1 sends a signal of wavelengths 1 to 5 to OADM 2.
S702: OADM 5 sends a signal of wavelengths 6 to 7 to OADM 2.
S703: OADM 2 reports an LOS alarm; sends the signal of the wavelengths 1 to 5 and fault indication of the signal of the wavelengths 6 to 7 to OADM 3; and sends the fault indication of the signal of the wavelengths 6 to 7 to OADM 5.
OADM 2 sends the fault indication of the signal of the wavelengths 6 to 7 to OADM 3. The fault indication of the signal of the wavelengths 6 to 7 sent by OADM 2 to OADM 3 further includes forward state indication; and OADM 3 determines, according to the forward state indication in the fault indication, that the fault indication is sent by an upstream optical network device, so as to suppress the LOS alarm according to the fault indication. See Table 7:

**Table 7: Fault indication of the signal of the wavelengths 6 to 7 sent by OADM 2 to OADM 3**

| Wavelength No. | Fault Type | Fault Location | Forward and Backward State |
|---|---|---|---|
| 6 | Intra-station signal failure | OADM 2 | Forward state |
| 7 | Intra-station signal failure | OADM 2 | Forward state |

OADM 2 sends the fault indication of the signal of the wavelengths 6 to 7 to OADM 5. The fault indication of the signal of the wavelengths 6 to 7 sent by OADM 2 to OADM 5 further includes backward state indication; and OADM 5 determines, according to the backward state indication in the fault indication, that the fault indication is sent by an downstream optical network device, and does not suppress the LOS alarm according to the fault indication. See Table 8:

**Table 8: Fault indication of the signal of the wavelengths 6 to 7 sent by OADM 2 to OADM 5**

| Wavelength No. | Fault Type | Fault Location | Forward and Backward State |
|---|---|---|---|
| 6 | Intra-station signal failure | OADM 2 | Backward state |
| 7 | Intra-station signal failure | OADM 2 | Backward state |

Because the inlet unit FIU 2 of the signal of the wavelengths 6 to 7 in OADM 2 detects no signal failure of the signal of the wavelengths 6 to 7, but another unit on the transmission path of the wavelengths 6 to 7, for example, MUX 3, detects that the signal fails, MUX 3 sends an LOS alarm to a controlling unit of OADM 2. Because OADM 2 receives no fault indication, sent by an upstream OADM that sends the signal of the wavelengths 6 to 7, of the signal of the wavelengths 6 to 7, OADM 2 reports the LOS alarm to a network management system; generates fault indication of the signal of the wavelengths 6 to 7, and sends the signal of the wavelengths 1 to 5 and the fault indication of the signal of the wavelengths 6 to 7 to OADM 3; and further sends the fault indication of the signal of the wavelengths 6 to 7 to OADM 5, where the fault indication of the signal of the wavelengths 6 to 7 may include intra-station signal failure state indication information of the signal of the wavelengths 6 to 7 and local location information. The fault indication is used to indicate that the fault type of the signal of the wavelengths 6 to 7 is an intra-station signal failure, and indicate that the fault location of the signal of the wavelengths 6 to 7 is a local location, so that OADM 5 obtains the fault type and fault location of the downstream OADM according to the fault indication of the signal of the wavelengths 6 to 7.
S704: OADM 3 sends the signal of the wavelengths 1 to 3 and the fault indication of the signal of the wavelength 7 to OADM 4.
OADM 3 sends the fault indication of the signal of the wavelength 7 to OADM 4. The fault indication of the signal of the wavelength 7 sent by OADM 3 to OADM 4 further includes forward state indication; and OADM 4 determines, according to the forward state indication in the fault indication, that the fault indication is sent by an upstream optical network device, so as to suppress the LOS alarm according to the fault indication. See Table 9:

**Table 9: Fault indication of the signal of the wavelength 7 sent by OADM 3 to OADM 4**

| Wavelength No. | Fault Type | Fault Location | Forward and Backward State |
|---|---|---|---|
| 7 | Intra-station signal failure | OADM 2 | Forward state |

S705: OADM 3 sends the signal of the wavelengths 4 to 5 and the fault indication of the signal of the wavelength 6 to OADM 6.
OADM 3 sends the fault indication of the signal of the wavelength 6 to OADM 6. The fault indication of the signal of the wavelength 6 sent by OADM 3 to OADM 6 further includes forward state indication; and OADM 6 determines, according to the forward state indication in the fault indication, that the fault indication is sent by an upstream optical network device, so as to suppress the LOS alarm according to the fault indication. See Table 10:

**Table 10: Fault indication of the signal of the wavelength 6 sent by OADM 3 to OADM 6**

| Wavelength No. | Fault Type | Fault Location | Forward and Backward State |
|---|---|---|---|
| 6 | Intra-station signal failure | OADM 2 | Forward state |

In this embodiment, the downstream OADM determines, according to the fault indication of the fault signals sent by the upstream OADM, whether to suppress the LOS alarm, which solves, to a certain extent, the problem where the upstream and downstream optical network devices report an alarm regarding the same fault repeatedly. Moreover, the fault type and fault location are added to the fault indication, and the fault indication containing the fault type and the fault location is sent to the downstream OADM, so that the network management system of the station of the downstream may obtain the upstream fault type and fault location by querying the fault indication of the fault signals.

FIG. 8 is a schematic structural diagram of an optical network device according to a first embodiment of the present invention. As shown in FIG. 8, the optical network device according to the embodiment includes a receiving unit 801 and a controlling unit 802, where the receiving unit 801 is configured to receive, by using an optical supervisory channel, fault indication of a fault signal sent by an upstream optical network device, where the fault indication includes a wavelength of the fault signal; and the controlling unit 802 is configured to determine a wavelength of all received signals corresponding to an LOS alarm, determine whether the wavelength of the fault signal includes the wavelength of all the received signals corresponding to the LOS alarm, and if yes, suppress the LOS alarm.

In the embodiment described above, the fault indication is inter-station signal failure indication, intra-station signal failure indication, and optical channel disconnection indication; the controlling unit 802 is further configured to determine a fault type of the fault signal as an inter-station line fault when the fault indication is the inter-station signal failure indication; the controlling unit 802 is further configured to determine the fault type of the fault signal as an intra-station fault when the fault indication is the intra-station signal failure indication; and the controlling unit 802 is further configured to determine the fault type of the fault signal as an optical channel disconnection fault when the fault indication is the optical channel disconnection indication.

In the embodiment described above, the fault indication may include fault location information; and the controlling unit 802 is further configured to obtain a fault location of the fault signal corresponding to the fault indication according to the fault location information in the fault indication.

In the embodiment described above, the fault indication is optical channel-forward defect indication-payload (Och-FDI-P) state information or optical channel-open connection indication (Och-OCI) state information.

The optical network device according to the embodiment may be used to implement the technical solution of the method embodiment illustrated in FIG. 2; the implementation principle and technical effects thereof are similar and will not be described repeatedly herein.

FIG. 9 is a schematic structural diagram of an optical network device according to a second embodiment of the present invention. As shown in FIG. 9, the optical network device according to the embodiment includes a controlling unit 901 and a sending unit 902, where the controlling unit 901 is configured to generate fault indication of a fault signal when a signal is faulty, where the fault indication includes a wavelength of the fault signal; and the sending unit 902 is configured to send the fault indication to a downstream optical network device of the fault signal by using an optical supervisory channel, so that a controlling unit of the downstream optical network device determines, according to the fault indication, whether to suppress a loss of signal (LOS) alarm.

In the embodiment described above, the fault indication is inter-station signal failure indication, intra-station signal failure indication, or optical channel disconnection indication; and the controlling unit 901 is further configured to generate the inter-station signal failure indication when a signal inlet unit detects that the signal fails, where the inter-station signal failure indication includes a wavelength of the failed signal, so that the downstream optical network device determines a fault type of the fault signal as an inter-station line fault according to the inter-station signal failure indication; the controlling unit 901 is further configured to generate the intra-station signal failure indication when the signal inlet unit detects no signal failure and another unit on a transmission path of the signal detects that the signal fails, where the intra-station signal failure indication includes a wavelength of the failed signal so that the downstream optical network device determines, according to the intra-station signal failure indication, a fault type the fault signal as an intra-station fault; and the controlling unit 901 is further configured to generate the optical channel disconnection indication when any unit on the transmission path of the signal detects that no optical channel corresponding to the wavelength of the signal is configured, where the optical channel disconnection indication includes the wavelength of the signal for which no optical channel is configured, so that the downstream optical network device determines, according to the optical channel disconnection indication, a fault type of the fault signal as an optical channel disconnection fault.

In the embodiment described above, the fault indication includes local location information.

In the embodiment described above, the fault indication is optical channel-forward defect indication-payload (Och-FDI-P) state information or optical channel-open connection indication (Och-OCI) state information.

In the embodiment described above, the sending unit 902 is further configured to send the fault indication to an upstream optical network device of the fault signal after the controlling unit generates the fault indication.

The optical network device according to the embodiment may be used to implement the technical solution of the method embodiment illustrated in FIG. 3; the implementation principle and technical effects thereof are similar and will not be described repeatedly.

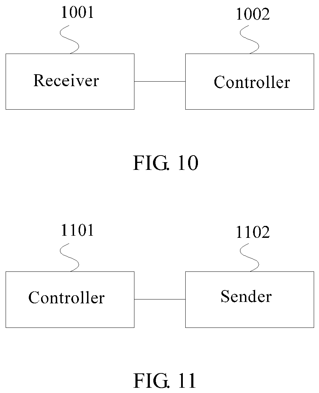

FIG. 10 is a schematic structural diagram of an optical network device according to a third embodiment of the present invention. As shown in the figure, the optical network device according to the embodiment includes a receiver 1001 and a controller 1002, where the receiver 1001 is configured to receive, by using an optical supervisory channel, fault indication of a fault signal sent by an upstream optical network device; and the controller 1002 is configured to determine a wavelength of all received signals corresponding to an LOS alarm, determine whether the wavelength of the fault signal includes a wavelength of all the received signals corresponding to the LOS alarm, and if yes, suppress the LOS alarm.

In the embodiment described above, the fault indication is inter-station signal failure indication, intra-station signal failure indication, and optical channel disconnection indication; the controller 1002 is further configured to determine a fault type of the fault signal as an inter-station line fault when the fault indication is the inter-station signal failure indication; the controller 1002 is further configured to determine a fault type of the fault signal as an intra-station fault when the fault indication is the intra-station signal failure indication; and the controller 1002 is further configured to determine a fault type of the fault signal as an optical channel disconnection fault when the fault indication is the optical channel disconnection indication.

In the embodiment described above, the fault indication may include fault location information; and the controller 1002 is further configured to obtain a fault location of the determined fault signal corresponding to the fault indication according to the fault location information in the fault indication.

In the embodiment described above, the fault indication is optical channel-forward defect indication-payload (Och-FDI-P) state information or optical channel-open connection indication (Och-OCI) state information.

The optical network device according to the embodiment may be used to implement the technical solution of the method embodiment illustrated in FIG. 2; the implementation principle and technical effects thereof are similar and will not be described repeatedly herein.

FIG. 11 is a schematic structural diagram of an optical network device according to a fourth embodiment of the present invention. As shown in FIG. 11, the optical network device according to the embodiment includes a controller 1101 and a sender 1102, where the controller 1101 is configured to generate fault indication of a fault signal when the signal is faulty, where the fault indication includes a wavelength of the fault signal; and the sender 1102 is configured to send the fault indication to a downstream optical network device of the fault signal by using an optical supervisory channel, so that a controller of the downstream optical network device determines, according to the fault indication, whether to suppress a loss of signal (LOS) alarm.

In the embodiment described above, the fault indication is inter-station signal failure state indication, intra-station signal failure state indication, or optical channel disconnection indication. the controller 1101 is further configured to generate the inter-station signal failure indication when a signal inlet unit detects that the signal fails, where the inter-station signal failure indication includes a wavelength of the failed signal, so that the downstream optical network device determines a fault type of the fault signal as an inter-station line fault according to the inter-station signal failure indication information;
the controller 1101 is further configured to generate the intra-station signal failure indication when the signal inlet unit detects no signal failure and another unit on a transmission path of the signal detects that the signal fails, where the intra-station signal failure indication includes a wavelength of the failed signal so that the downstream optical network device determines, according to the intra-station signal failure state indication, a fault type the fault signal as an intra-station fault; and
the controller 1101 is further configured to generate the optical channel disconnection indication when any unit on the transmission path of the signal detects that no optical channel corresponding to the wavelength of the signal is configured, where the optical channel disconnection indication includes the wavelength of the signal for which no optical channel is configured, so that the downstream optical network device determines, according to the optical channel disconnection indication, a fault type of the fault signal as an optical channel disconnection fault.

In the embodiment described above, the fault indication includes local location information.

In the embodiment described above, the fault indication is optical channel-forward defect indication-payload (Och-FDI-P) state information or optical channel-open connection indication (Och-OCI) state information.

In the embodiment described above, the sender 1102 is further configured to send the fault indication to an upstream optical network device of the fault signal after the controller generates the fault indication.

The optical network device according to the embodiment may be used to implement the technical solution of the method embodiment illustrated in FIG. 3; the implementation principle and technical effects thereof are similar and will not be described repeatedly.

A person of ordinary skill in the art may understand that all or a part of the steps of the foregoing method embodiments may be implemented by a program instructing relevant hardware. The foregoing program may be stored in a computer readable storage medium. When the program runs, the foregoing steps in the method embodiments are performed. The foregoing storage mediums include various mediums capable of storing program code, such as an ROM, an RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that he may still make modifications to the technical solutions described in the foregoing embodiments, or make equivalent replacements to some or all the technical features thereof, without departing from the technical solutions of the embodiments of the present invention.

## Claims

1. A method for alarm suppression, comprising:
receiving (201), by a first optical network device and through an optical supervisory channel, a fault indication sent by a second optical network device that is an upstream optical network device adjacent to the first optical network device, wherein the fault indication comprises information indicating one or more faulty wavelengths;
determining (202), by a controlling unit of the first optical network device, one or more wavelengths corresponding to a loss of signal LOS alarm according to a configured optical signal to be received by an optical transmission unit comprised by the first optical network device, wherein the LOS alarm is sent from the optical transmission unit to the controlling unit; and
determining (203), by the controlling unit of the first optical network device, whether the one or more faulty wavelengths comprise the one or more wavelengths corresponding to the LOS alarm;
if yes, suppressing (204) the LOS alarm.

2. The method according to claim 1, wherein:
the fault indication further comprises an indication for identifying a fault type corresponding to the one or more faulty wavelengths, wherein the indication for identifying the fault type is an inter-station signal failure indication, an intra-station signal failure indication, or an optical channel disconnection indication; the method further comprises:
when the fault indication is the inter-station signal failure indication, determining a fault type of the fault signal is an inter-station line fault;
when the fault indication is the intra-station signal failure indication, determining the fault type of the fault signal is an intra-station fault; and
when the fault indication is the optical channel disconnection indication, determining the fault type of the fault signal is an optical channel disconnection fault.

3. The method according to claim 1 or 2, wherein:
the fault indication further comprises information of a fault location;
the method further comprising:
obtaining a fault location corresponding to the fault indication according to the fault location in the fault indication.

4. The method according to claim 1, wherein the fault indication is optical channel-forward defect indication-payload Och-FDI-P state information or optical channel-open connection indication Och-OCI state information.

5. An optical network device, comprising:
a receiving unit (801, 1001), configured to receive, through an optical supervisory channel, a fault indication sent by an upstream optical network device adjacent to the optical network device, wherein the fault indication comprises information indicating one or more faulty wavelengths; and
a controlling unit (802, 1002), configured to determine one or more wavelengths corresponding to a loss of signal LOS alarm according to a configured optical signal to be received by an optical transmission unit comprised by the optical network device, wherein the LOS alarm is sent from the optical transmission unit to the controlling unit; and to determine whether the one or more faulty wavelengths comprises the one or more wavelengths corresponding to the LOS alarm; and if yes, suppress the LOS alarm.

6. The optical network device according to claim 5, wherein: the fault indication further comprises an indication for identifying a fault type corresponding to the one or more faulty wavelengths, wherein the indication for identifying the fault type is an inter-station signal failure indication, an intra-station signal failure indication, or an optical channel disconnection indication; the controlling unit is further configured to determine a fault type of the fault signal as an inter-station line fault when the fault indication is the inter-station signal failure indication;
the controlling unit (802,1002) is further configured to determine the fault type of the fault signal as an intra-station fault when the fault indication is the intra-station signal failure indication; and
the controlling unit (802, 1002) is further configured to determine the fault type of the fault signal as an optical channel disconnection fault when the fault indication is the optical channel disconnection indication.

7. The optical network device according to claim 5 or 6, wherein: the optical channel fault indication further comprises information of a fault location; and the controlling unit (802, 1002) is further configured to obtain a fault location corresponding to the fault indication according to the fault location in the fault indication.

8. The optical network device according to claim 5, wherein the fault indication is optical channel-forward defect indication-payload Och-FDI-P state information or optical channel-open connection indication Och-OCI state information.

## Patentansprüche

1. Verfahren zur Alarmunterdrückung, das Folgendes umfasst:
Empfangen (201), durch eine erste Vorrichtung eines optischen Netzes und über einen optischen Überwachungskanal, einer Fehlerangabe, die durch eine zweite Vorrichtung eines optischen Netzes, die eine vorgelagerte Vorrichtung eines optischen Netzes benachbart der ersten Vorrichtung des optischen Netzes ist, gesendet wird, wobei die Fehlerangabe Informationen umfasst, die eine oder mehrere fehlerhafte Wellenlängen angeben;
Bestimmen (202), durch eine Steuereinheit der ersten Vorrichtung des optischen Netzes, einer oder mehrerer Wellenlängen, die einem Signalverlust-Alarm, LOS-Alarm, entsprechen, gemäß einem konfigurierten optischen Signal, das durch eine optische Übertragungseinheit, die in der ersten Vorrichtung des optischen Netzes enthalten ist, empfangen werden soll, wobei der LOS-Alarm von der optischen Übertragungseinheit zu der Steuereinheit gesendet wird; und
Bestimmen (203), durch die Steuereinheit der ersten Vorrichtung des optischen Netzes, ob die eine oder die mehreren fehlerhaften Wellenlängen die eine oder die mehreren Wellenlängen umfassen, die dem LOS-Alarm entsprechen;
falls ja, Unterdrücken (204) des LOS-Alarms.

2. Verfahren nach Anspruch 1, wobei:
die Fehlerangabe ferner eine Angabe zum Identifizieren eines Fehlertyps, der der einen oder den mehreren fehlerhaften Wellenlängen entspricht, umfasst, wobei die Angabe zum Identifizieren des Fehlertyps eine Fehlerangabe für ein Signal zwischen Stationen, eine Fehlerangabe für ein Signal innerhalb einer Station oder eine Angabe einer Unterbrechung eines optischen Kanals ist; wobei das Verfahren ferner Folgendes umfasst:
wenn die Fehlerangabe die Fehlerangabe für ein Signal zwischen Stationen ist, Bestimmen, dass ein Fehlertyp des Fehlersignals ein Leitungsfehler zwischen Stationen ist;
wenn die Fehlerangabe die Fehlerangabe für ein Signal innerhalb einer Station ist, Bestimmen, dass der Fehlertyp des Fehlersignals ein stationsinterner Fehler ist; und wenn die Fehlerangabe die Angabe einer Unterbrechung eines optischen Kanals ist, Bestimmen, dass der Fehlertyp des Fehlersignals ein Unterbrechungsfehler des optischen Kanals ist.

3. Verfahren nach Anspruch 1 oder 2, wobei
die Fehlerangabe ferner Informationen über einen Fehlerort umfasst;
wobei das Verfahren ferner Folgendes umfasst:
Erhalten eines Fehlerorts, der der Fehlerangabe gemäß dem Fehlerort in der Fehlerangabe entspricht.

4. Verfahren nach Anspruch 1, wobei die Fehlerangabe Zustandsinformationen über Vorwärtsdefektangabe-Nutzdaten des optischen Kanals, Och-FDI-P-Zustandsinformationen, oder Zustandsinformationen über eine Angabe einer offenen Verbindung eines optischen Kanals, Och-OCI-Zustandsinformationen, ist.

5. Vorrichtung eines optischen Netzes, die Folgendes umfasst:
eine Empfangseinheit (801, 1001), die konfiguriert ist, über einen optischen Überwachungskanal eine Fehlerangabe, die durch eine vorgelagerte Vorrichtung eines optischen Netzes benachbart der Vorrichtung des optischen Netzes gesendet wird, zu empfangen, wobei die Fehlerangabe Informationen umfasst, die eine oder mehrere fehlerhafte Wellenlängen angeben; und
eine Steuereinheit (802, 1002), die konfiguriert ist, eine oder mehrere Wellenlängen, die einem Signalverlust-Alarm, LOS-Alarm, entsprechen, gemäß einem konfigurierten optischen Signal, das durch eine optische Übertragungseinheit, die in der Vorrichtung des optischen Netzes enthalten ist, empfangen werden soll, zu bestimmen, wobei der LOS-Alarm von der optischen Übertragungseinheit zu der Steuereinheit gesendet wird; und zu bestimmen, ob die eine oder die mehreren fehlerhaften Wellenlängen die eine oder die mehreren Wellenlängen enthalten, die dem LOS-Alarm entsprechen; und falls ja, den LOS-Alarm zu unterdrücken.

6. Vorrichtung des optischen Netzes nach Anspruch 5, wobei: die Fehlerangabe ferner eine Angabe zum Identifizieren eines Fehlertyps, der der einen oder den mehreren fehlerhaften Wellenlängen entspricht, umfasst, wobei die Angabe zum Identifizieren des Fehlertyps eine Fehlerangabe für ein Signal zwischen Stationen, eine Fehlerangabe für ein Signal innerhalb einer Station oder eine Angabe einer Unterbrechung eines optischen Kanals ist; wobei die Steuereinheit ferner konfiguriert ist, einen Fehlertyp des Fehlersignals als einen Leitungsfehler zwischen Stationen zu bestimmen, wenn die Fehlerangabe die Fehlerangabe für ein Signal zwischen Stationen ist;
die Steuereinheit (802, 1002) ferner konfiguriert ist, den Fehlertyp des Fehlersignals als einen Fehler innerhalb einer Station zu bestimmen, wenn die Fehlerangabe die Fehlerangabe für ein Signal innerhalb einer Station ist; und
die Steuereinheit (802, 1002) ferner konfiguriert ist, den Fehlertyp des Fehlersignals als einen Fehler einer Unterbrechung eines optischen Kanals zu bestimmen, wenn die Fehlerangabe die Angabe einer Unterbrechung eines optischen Kanals ist.

7. Vorrichtung des optischen Netzes nach Anspruch 5 oder 6, wobei die Fehlerangabe für den optischen Kanal ferner Informationen über einen Fehlerort umfasst; und die Steuereinheit (802, 1002) ferner konfiguriert ist, einen Fehlerort, der der Fehlerangabe gemäß dem Fehlerort in der Fehlerangabe entspricht, zu erhalten.

8. Vorrichtung des optischen Netzes nach Anspruch 5, wobei die Fehlerangabe Zustandsinformationen über Vorwärtsdefektangabe-Nutzdaten des optischen Kanals, Och-FDI-P-Zustandsinformationen, oder Zustandsinformationen über Angabe einer offenen Verbindung eines optischen Kanals, Och-OCI-Zustandsinformationen, ist.

## Revendications

1. Procédé de suppression d'alarme, comprenant les étapes consistant à :
recevoir (201), par un premier dispositif de réseau optique et par l'intermédiaire d'un canal de supervision optique, une indication de défaut envoyée par un deuxième dispositif de réseau optique qui est un dispositif de réseau optique en amont, adjacent au premier dispositif de réseau optique, l'indication de défaut contenant des informations indiquant une ou plusieurs longueurs d'onde défaillantes ;
déterminer (202), par une unité de commande du premier dispositif de réseau optique, une ou plusieurs longueurs d'onde correspondant à une alarme de perte de signal LOS d'après un signal optique configuré que doit recevoir une unité d'émission optique dont est doté le premier dispositif de réseau optique, l'alarme LOS étant envoyée par l'unité d'émission optique à l'unité de commande ; et
déterminer (203), par l'unité de commande du premier dispositif de réseau optique, si lesdites une ou plusieurs longueurs d'onde défaillantes comprennent lesdites une ou plusieurs longueurs d'onde correspondant à l'alarme LOS ;
si c'est le cas, supprimer (204) l'alarme LOS.

2. Procédé selon la revendication 1, dans lequel :
l'indication de défaut contient également une indication permettant d'identifier un type de défaut correspondant auxdites une ou plusieurs longueurs d'onde défaillantes, l'indication permettant d'identifier le type de défaut étant une indication de défaillance de signal inter-station, une indication de défaillance de signal intra-station ou une indication de déconnexion de canal optique ; le procédé comprenant également les étapes consistant à :
lorsque l'indication de défaut est l'indication de défaillance de signal inter-station, déterminer qu'un type de défaut du signal de défaut est un défaut de ligne inter-station ;
lorsque l'indication de défaut est l'indication de défaillance de signal intra-station, déterminer que le type de défaut du signal de défaut est un défaut intra-station ; et
lorsque l'indication de défaut est l'indication de déconnexion de canal optique, déterminer que le type de défaut du signal de défaut est un défaut de déconnexion de canal optique.

3. Procédé selon la revendication 1 ou 2, dans lequel :
l'indication de défaut contient également des informations concernant un emplacement de défaut ;
le procédé comprenant également l'étape consistant à :
obtenir un emplacement de défaut correspondant à l'indication de défaut d'après l'emplacement de défaut contenu dans l'indication de défaut.

4. Procédé selon la revendication 1, dans lequel l'indication de défaut consiste en informations d'état de charge utile d'indication de défaut directe de canal optique Och-FDI-P ou en informations d'état d'indication de connexion ouverte de canal optique Och-OCI.

5. Dispositif de réseau optique, comprenant :
une unité de réception (801, 1001), configurée pour recevoir, par l'intermédiaire d'un canal de supervision optique, une indication de défaut envoyée par un dispositif de réseau optique en amont, adjacent au dispositif de réseau optique, l'indication de défaut contenant des informations indiquant une ou plusieurs longueurs d'onde défaillantes ; et
une unité de commande (802, 1002), configurée pour déterminer une ou plusieurs longueurs d'onde correspondant à une alarme de perte de signal LOS d'après un signal optique configuré que doit recevoir une unité d'émission optique dont est doté le dispositif de réseau optique, l'alarme LOS étant envoyée par l'unité d'émission optique à l'unité de commande ; et pour déterminer si lesdites une ou plusieurs longueurs d'onde défaillantes comprennent lesdites une ou plusieurs longueurs d'onde correspondant à l'alarme LOS ; et si c'est le cas, supprimer l'alarme LOS.

6. Dispositif de réseau optique selon la revendication 5, dans lequel : l'indication de défaut contient également une indication permettant d'identifier un type de défaut correspondant auxdites une ou plusieurs longueurs d'onde défaillantes, l'indication permettant d'identifier le type de défaut étant une indication de défaillance de signal inter-station, une indication de défaillance de signal intra-station ou une indication de déconnexion de canal optique ; l'unité de commande est également configurée pour déterminer qu'un type de défaut du signal de défaut est un défaut de ligne inter-station lorsque l'indication de défaut est l'indication de défaillance de signal inter-station ; l'unité de commande (802, 1002) est également configurée pour déterminer que le type de défaut du signal de défaut est un défaut intra-station lorsque l'indication de défaut est l'indication de défaillance de signal intra-station ; et
l'unité de commande (802, 1002) est également configurée pour déterminer que le type de défaut du signal de défaut est un défaut de déconnexion de canal optique lorsque l'indication de défaut est l'indication de déconnexion de canal optique.

7. Dispositif de réseau optique selon la revendication 5 ou 6, dans lequel : l'indication de défaut de canal optique comprend également des informations concernant un emplacement de défaut ; et l'unité de commande (802, 1002) est également configurée pour obtenir un emplacement de défaut correspondant à l'indication de défaut d'après l'emplacement de défaut contenu dans l'indication de défaut.

8. Dispositif de réseau optique selon la revendication 5, dans lequel l'indication de défaut consiste en informations d'état de charge utile d'indication de défaut directe de canal optique Och-FDI-P ou en informations d'état d'indication de connexion ouverte de canal optique Och-OCI.
